# EUROPEAN PATENT APPLICATION

(11) **EP 4 733 342 A1**
(43) Date of publication of application: **29.04.2026**
(21) Application number: 24825859.2
(22) Date of filing: 17.06.2024
(51) Int. Cl.: C08G 18/24, C08G 18/00

(54) **METHOD FOR PRODUCING CATALYST COMPOSITION AND METHOD FOR PRODUCING POLYURETHANE FOAM**

(30) Priority: 23.06.2023 JP 2023103718
(71) Applicant: Nitto Kasei Co., Ltd., Osaka-shi Osaka 533-0031 (JP)
(72) Inventor: YOSHIYAMA, Haruka, Osaka-shi, Osaka 533-0031 (JP)
(74) Representative: Gulde & Partner
(86) International application number: PCT/JP2024/021880
(87) International publication number: WO 2024/262458

(57) **Abstract**

An object of the present invention is to provide a method for producing a catalyst composition for producing polyurethane foam, which has high safety, has a practical curing speed, and allows the produced polyurethane foam to meet air permeability requirements. According to the present invention, there is provided a method for producing a catalyst composition for producing polyurethane foam, comprising a step of mixing at least one carboxylic acid selected from neodecanoic acid, neononanoic acid, and isononanoic acid in a molar ratio of 2.10 to 4.00 moles per 1 mole of stannous chloride.

## Description

### [Technical Field]

The present invention relates to a method of producing a catalyst composition for producing polyurethane foam, and a method for producing polyurethane foam using the catalyst composition obtained by this production method.

### [Background Art]

Polyurethane foam is produced by adding a catalyst, a blowing agent, a surfactant, etc. to main raw materials of polyol and polyisocyanate, and is used for various types of foams. For example, it is widely used after being processed into flexible foams such as cushions and mattresses, and rigid foams for building materials, home appliances, and the like.

As catalysts for forming polyurethane foam, resinification catalysts such as amine compounds and blowing catalysts such as metal compounds and amine compounds are used. As the metal compounds, tin, lead, bismuth, zirconium, etc. are used, and among them, tin octylate (tin 2-ethylhexanoate) has been widely used (PTLs 1 and 2).

However, in recent years, the use of tin 2-ethylhexanoate has become a problem in terms of environment and safety, and alternative catalysts are desired. For example, proposals have been made to use tin n-octoate, tin n-nonanoate, tin isononanoate, tin neodecanoate, etc. as alternative catalysts, but there have been problems that they do not have a practical curing speed or that the air permeability of the obtained polyurethane foam is not satisfactory, and there was room for improvement (PTLs 3 and 4).

### [Citation List]

### [Patent Literature]

[PTL 1] JP-A-2023-32584
[PTL 2] JP-A-2022-73861
[PTL 3] JP-A-2011-21188
[PTL 4] WO2014/ 106642

### [Summary of Invention]

### [Technical Problem]

Therefore, the development of a catalyst for producing polyurethane foam that is highly safe (low in toxicity and environmental pollution), has a practical curing speed, and allows the produced polyurethane foam to meet air permeability requirements has been desired.

The present invention has been made in view of such circumstances, and an object thereof is to provide a method of producing a catalyst composition for producing polyurethane foam that is highly safe, has a practical curing speed, and allows the produced polyurethane foam to meet air permeability requirements.

### [Solution to Problem]

According to the present invention, the following inventions are provided.
[1] A method for producing a catalyst composition for producing polyurethane foam, comprising a step of mixing at least one carboxylic acid selected from neodecanoic acid, neononanoic acid, and isononanoic acid in a molar ratio of 2.10 to 4.00 moles per 1 mole of stannous chloride.
[2] The method according to [1], wherein said carboxylic acid is neodecanoic acid.
[3] A method for producing polyurethane foam, characterized by reacting an active hydrogen-containing organic compound containing a polyol with a polyisocyanate in the presence of the catalyst composition produced by the method according to [1] or [2].

### [Advantageous Effects of Invention]

The catalyst composition produced by the method of the present invention has a practical curing speed. Further, polyurethane foam produced using the catalyst composition produced by the method of the present invention has high air permeability, so it meets air permeability requirements. Moreover, the catalyst composition produced by the method of the present invention exhibits the above excellent effects even without containing tin 2-ethylhexanoate, so there is no need to include tin 2-ethylhexanoate, and safety is high. Therefore, according to the present invention, a method for producing a catalyst composition for producing polyurethane foam is provided, which has high safety, has a practical curing speed, and allows the produced polyurethane foam to meet air permeability requirements.

### [Description of Embodiments]

Next, the present invention will be described in detail.

### 1. Method for Producing Catalyst Composition for Producing Polyurethane Foam

The method for producing a catalyst composition for producing polyurethane foam of the present invention comprises a step of mixing at least one carboxylic acid selected from neodecanoic acid, neononanoic acid, and isononanoic acid in a molar ratio of 2.10 to 4.00 moles per 1 mole of stannous chloride. By this mixing step, 1 mole of stannous chloride and the carboxylic acid react, and a catalyst composition suitable for producing polyurethane foam is obtained (the catalyst composition obtained in this step is referred to as "Catalyst Composition A").

Stannous chloride is a divalent tin compound represented by SnCl₂, and may be an anhydride or a hydrate (e.g., dihydrate). As the carboxylic acid, neodecanoic acid is particularly preferable from the viewpoint of catalytic activity and air permeability. By mixing stannous chloride and the carboxylic acid in the above ratio, a catalyst composition is obtained in which the coordination number of carboxylate ions (RCOO⁻) and carboxylic acid (RCOOH) to a tin atom exceeds 2.

The ratio of the carboxylic acid per 1 mole of stannous chloride is, from the viewpoint of curability (rise time), preferably 2.10 to 3.00 moles, more preferably 2.10 to 2.50 moles, and even more preferably 2.10 to 2.30. Also, this ratio, from the viewpoint of air permeability, is preferably 2.20 to 4.00 moles, and more preferably 2.50 to 3.00 moles. This ratio, from the viewpoint of the balance between curability and air permeability, is preferably 2.20 to 2.50 moles. This ratio, specifically, is, for example, 2.10, 2.15, 2.20, 2.25, 2.30, 2.40, 2.50, 2.60, 2.70, 2.80, 2.90, 3.00, 3.10, 3.20, 3.30, 3.40, 3.50, 3.60, 3.70, 3.80, 3.90, 4.00 moles, and may be in a range between any two of the numerical values exemplified here.

Stannous chloride and the carboxylic acid are preferably mixed in the presence of an alkali compound. As the alkali compound, sodium hydroxide can be mentioned. It is preferred to first mix the carboxylic acid and an aqueous solution of the alkali compound, and then to mix the resultant aqueous solution with the stannous chloride. Further, it is preferred that an aqueous solution of stannous chloride hydrate is mixed with the carboxylic acid. The temperature of the aqueous solution obtained by mixing is preferably 30 to 70°C. This is because the reaction tends to proceed rapidly in this case.

### 2. Method for Producing Polyurethane Foam

The method for producing polyurethane foam of the present invention is characterized by reacting and foaming an active hydrogen-containing organic compound containing a polyol and a polyisocyanate in the presence of a catalyst composition.

### 2-1. Catalyst Composition

As the catalyst composition used for producing polyurethane foam, only the above-mentioned Catalyst Composition A may be used, or an additional catalyst may be used as needed. The amount of Catalyst Composition A used is not particularly limited, but is preferably in the range of 0.01 to 1 part by mass, and more preferably in the range of 0.05 to 0.5 parts by mass, per 100 parts by mass of the active hydrogen-containing organic compound containing a polyol.

Examples of the additional catalyst include other resinification catalysts, blowing catalysts, organometallic catalysts, metal carboxylate catalysts, or quaternary ammonium salt catalysts. Examples of other resinification catalysts include amine-based catalysts such as 1,4-diazabicyclo[2.2.2]octane (DABCO), triethylenediamine, N,N-dicyclohexylmethylamine, N,N-dimethylcyclohexylamine, N,N-dimethylaminohexanol, 1,2-dimethylimidazole, N-(N',N'-dimethylaminoethyl)-morpholine, tetramethylguanidine, dimethylaminoethanol, N-methyl-N'-(2-hydroxyethyl)-piperazine, N,N,N',N'-tetramethylpropane-1,3-diamine, N,N'-dimethylpiperazine, N,N,N',N'-tetramethylhexane-1,6-diamine, N,N,N',N'',N''-pentamethyldipropylenetriamine, N-(2-hydroxyethyl)morpholine, ethylene glycol bis(3-dimethyl)-aminopropyl ether, and N-methyl-N'-(2-dimethylamino)ethylpiperazine.

Examples of the blowing catalyst include amine-based catalysts such as bis(2-dimethylaminoethyl) ether, triethylamine, dimethylaminoethoxyethanol, N,N,N'-trimethylaminoethyl-ethanolamine, and N,N,N',N",N"-pentamethyldiethylenetriamine. The blending amount of the additional catalyst is preferably 0.01 to 1.0 part by mass, more preferably 0.02 to 0.5 parts by mass, and still more preferably 0.05 to 0.2 parts by mass, per 100 parts by mass of the polyol.

The additional catalyst preferably does not contain tin 2-ethylhexanoate, but may contain it. Assuming Catalyst Composition A is 100% by mass, the content of tin 2-ethylhexanoate is, for example, 0 to 10% by mass, preferably 0 to 5% by mass, and more preferably 0 to 1% by mass.

### 2-2 Active Hydrogen-Containing Organic Compound Including Polyol

An active hydrogen-containing organic compound is an organic compound having active hydrogen. Active hydrogen is a hydrogen of a functional group capable of reacting with an isocyanate to form a urethane bond or a urea bond. Examples of such a functional group include a hydroxyl group and an amino group. Examples of the active hydrogen-containing organic compound include an organic compound having two or more of the above functional groups in the molecule. The active hydrogen-containing organic compound specifically includes a polyol (a compound having two or more hydroxyl groups at the molecular ends). The active hydrogen-containing organic compound may contain only a polyol, or may contain both a polyol and an active hydrogen-containing organic compound other than a polyol (a polyamine, etc.). The polyol is not particularly limited as long as it is generally used for the production of urethane compositions, and examples thereof include polyether polyols, polyester polyols, polymer polyols, and further flame-retardant polyols such as phosphorus-containing polyols and halogen-containing polyols. These polyols may be used alone or in combination as appropriate.

Examples of the polyether polyol include those obtained by ring-opening addition polymerization of, for example, ethylene oxide, propylene oxide, or a mixture thereof, using, for example, ethylene glycol, propylene glycol, glycerin, pentaerythritol, ethylenediamine, ethanolamine, diethanolamine, or the like as an initiator, or polytetramethylene ether glycol obtained by ring-opening polymerization of tetrahydrofuran.

Examples of the polyester polyol include those obtained by a condensation reaction between a polybasic carboxylic acid such as maleic acid, fumaric acid, succinic acid, adipic acid, sebacic acid, azelaic acid, phthalic acid, isophthalic acid, terephthalic acid, or trimellitic acid and a polyhydric alcohol, and polymers of lactones. Examples of the polyhydric alcohol include ethylene glycol, diethylene glycol, triethylene glycol, propylene glycol, dipropylene glycol, 1,3-butylene glycol, 1,4-butylene glycol, 1,5-pentanediol, 1,6-hexanediol, neopentyl glycol, decamethylene glycol, 2,4,4-trimethyl-1,3-pentanediol, cyclohexanediol, cyclohexanedimethanol, xylylene glycol, hydroquinone bis(hydroxyethyl ether), hydrogenated bisphenol A, trimethylolpropane, glycerin, 1,2,6-hexanetriol, pentaerythritol, castor oil, and the like. Also included are oil-modified polyester polyols obtained by blending a higher fatty acid such as coconut oil fatty acid, linseed oil fatty acid, soybean oil fatty acid, cottonseed oil fatty acid, tung oil fatty acid, or castor oil fatty acid in the acid component. The polymers of lactones include those obtained by ring-opening polymerization of ε-caprolactam, α-methyl-ε-caprolactam, ε-methyl-ε-caprolactam, and the like.

Examples of the polymer polyol include compounds obtained by polymerizing or copolymerizing a hydroxyl group-containing polymerizable monomer such as hydroxyethyl acrylate, hydroxybutyl acrylate, or trimethylolpropane acrylic acid monoester alone, or with a monomer copolymerizable therewith, such as acrylic acid, methacrylic acid, styrene, acrylonitrile, or α-methylstyrene.

Examples of the flame-retardant polyol include phosphorus-containing polyols obtained by adding an alkylene oxide to a phosphoric acid compound, polyols obtained by ring-opening polymerization of epichlorohydrin or trichlorobutylene oxide, and halogen-containing polyols in which some or all of the hydrogen atoms of a polyether polyol, a polyester polyol, or an acrylic polyol are substituted with fluorine atoms.

Examples of polyamines include aliphatic polyamines and aromatic polyamines. Examples of aliphatic polyamines include ethylenediamine, polyether polyamines, etc. Examples of aromatic polyamines include 3,3'-dichloro-4,4'-diaminodiphenylmethane, DETDA, 2,4-diamino-3,5-diethyltoluene, 2,6-diamino-3,5-diethyltoluene, and mixtures thereof, mixed products such as Ethacure 100 (mass ratio of 2,4-isomer/2,6-isomer of about 80/20) manufactured by Albemarle Corporation, Ethacure 420 (4,4'-methylenebis(N-sec-butylaniline)) manufactured by Albemarle Corporation, 4,4'-methylenebis(2-ethyl-6-methylaniline), and the like.

These active hydrogen-containing organic compounds can be used singly or in combination of two or more. In particular, it is preferable that the active hydrogen-containing organic compound contains both a polyol and a polyamine. In this case, workability, curability, and mechanical properties of the composition become particularly good.

### 2-3. Polyisocyanate

A polyisocyanate is a compound having two or more isocyanate groups in the molecule, and is not particularly limited as long as it is one that is generally used. Examples thereof include alkylene diisocyanates such as trimethylene diisocyanate, trimethylhexamethylene diisocyanate, tetramethylene diisocyanate, and hexamethylene diisocyanate; cycloalkylene-based diisocyanates such as bis(isocyanatomethyl)cyclohexane, cyclopentane diisocyanate, cyclohexane diisocyanate, and isophorone diisocyanate; aromatic diisocyanates such as tolylene diisocyanate, phenylene diisocyanate, diphenylmethane diisocyanate, and diphenyl ether diisocyanate; araliphatic diisocyanates such as xylylene diisocyanate and diisocyanatodiethylbenzene; triisocyanates such as triphenylmethane triisocyanate, triisocyanatobenzene, and triisocyanatotoluene; tetraisocyanates such as diphenyldimethylmethane tetraisocyanate; polymerized polyisocyanates such as tolylene diisocyanate dimer and trimer; and terminal isocyanate-containing compounds obtained by reacting these polyisocyanates in excess with a low-molecular-weight active hydrogen-containing organic compound such as ethylene glycol, propylene glycol, diethylene glycol, trimethylolpropane, hydrogenated bisphenol A, hexanetriol, glycerin, pentaerythritol, castor oil, or triethanolamine.

The content of the polyisocyanate of the present invention is preferably 1 to 100 parts by mass, preferably 5 to 70 parts by mass, more preferably 20 to 60 parts by mass, and even more preferably 30 to 50 parts by mass, per 100 parts by mass of the active hydrogen-containing organic compound. This content is, specifically, for example, 1, 5, 10, 15, 20, 30, 40, 50, 60, 70, 80, 90, 100 parts by mass, and may be within a range between any two of the numerical values exemplified here.

### 2-4. Other Components

In the method for producing a polyurethane foam of the present invention, a blowing agent, a surfactant, a flame retardant, a crosslinking agent, and the like can be used as necessary. Furthermore, if necessary, a colorant, an anti-aging agent, and other conventionally known additives can also be used.

As the blowing agent, water, alternative fluorocarbons, hydrocarbons such as dichloromethane or pentane can be used alone or in combination. Water is particularly preferable as the blowing agent. In the case of water, carbon dioxide gas is generated during the reaction of the polyol and the polyisocyanate, and foaming is performed by the carbon dioxide gas. The amount of water as a blowing agent is preferably 1.0 to 5.0 parts by mass, and more preferably 2.0 to 4.0 parts by mass, per 100 parts by mass of the polyol.

The foam stabilizer may be any one that is usually adopted as a raw material for polyurethane foam, and examples thereof include silicone-based compounds, nonionic surfactants, and the like. The amount of the foam stabilizer is preferably 0.1 to 4.0 parts by mass, more preferably 0.2 to 2.0 parts by mass, and still more preferably 0.3 to 1.0 part by mass, per 100 parts by mass of the polyol.

### 2-5. Production Method

The polyurethane foam of the present invention can be produced, for example, by mixing and stirring the above materials using a stirrer, a dedicated polyurethane foaming machine, or the like, and then injecting the mixture into a container or a mold for foam molding.

### [EXAMPLE]

Hereinafter, the present invention will be specifically described with reference to examples, but the scope of the present invention is not limited by these examples.

### <Production Example 1 (Catalyst Composition A1)>

Into a 1000 ml four-necked flask equipped with a nitrogen inlet tube, 260.83 g (1.37 mol, 2.12 eq.) of neodecanoic acid and 118.16 g of water were weighed, and by dropping 107.84 g (1.29 mol, 2.00 eq.) of a 48% sodium hydroxide aqueous solution, an aqueous sodium neodecanoate solution was prepared. After weighing and mixing 59.69 g of heptane, 200.00 g (0.65 mol, 1.00 eq.) of a 73% stannous chloride dihydrate aqueous solution was dropped and reacted. The aqueous layer was removed by liquid separation, and after washing the organic layer with water, the solvent was distilled off by concentration under reduced pressure, yielding 299.34 g (yield 96%) of a yellow liquid <A1>.

### <Production Example 2 (Catalyst Composition A2)>

Into a 1000 ml four-necked flask equipped with a nitrogen inlet tube, 236.31 g (1.51 mol, 2.34 eq.) of neodecanoic acid and 130.42 g of water were weighed, and by dropping 107.84 g (1.29 mol, 2.00 eq.) of a 48% sodium hydroxide aqueous solution, an aqueous sodium neodecanoate solution was prepared. After weighing and mixing 59.69 g of heptane, 200.00 g (0.65 mol, 1.00 eq.) of a 73% stannous chloride dihydrate aqueous solution was dropped and mixed. The aqueous layer was removed by liquid separation, and after washing the organic layer with water, the solvent was distilled off by concentration under reduced pressure, yielding 322.88 g (yield 96%) of a yellow liquid <A2>.

### <Production Example 3 (Catalyst Composition A3)>

Into a 1000 ml four-necked flask equipped with a nitrogen inlet tube, 302.08 g (1.75 mol, 2.71 eq.) of neodecanoic acid and 151.04 g of water were weighed, and by dropping 107.84 g (1.29 mol, 2.00 eq.) of a 48% sodium hydroxide aqueous solution, an aqueous sodium neodecanoate solution was prepared. After weighing and mixing 59.69 g of heptane, 200.00 g (0.65 mol, 1.00 eq.) of a 73% stannous chloride dihydrate aqueous solution was dropped and mixed. The aqueous layer was removed by liquid separation, and after washing the organic layer with water, the solvent was distilled off by concentration under reduced pressure, yielding 362.48 g (yield 96%) of a yellow liquid <A3>.

### <Production Example 4 (Catalyst Composition A4)>

Into a 1000 ml four-necked flask equipped with a nitrogen inlet tube, 364.50 g (2.12 mol, 3.27 eq.) of neodecanoic acid and 182.25 g of water were weighed, and by dropping 107.84 g (1.29 mol, 2.00 eq.) of a 48% sodium hydroxide aqueous solution, an aqueous sodium neodecanoate solution was prepared. After weighing and mixing 59.69 g of heptane, 200.00 g (0.65 mol, 1.00 eq.) of a 73% stannous chloride dihydrate aqueous solution was dropped and mixed. The aqueous layer was removed by liquid separation, and after washing the organic layer with water, the solvent was distilled off by concentration under reduced pressure, yielding 422.40 g (yield 96%) of a yellow liquid <A4>.

### <Comparative Production Example 1 (Catalyst Composition H1)>

Into a 1000 ml four-necked flask equipped with a nitrogen inlet tube, 526.12 g (3.05 mol, 4.72 eq.) of neodecanoic acid and 263.06 g of water were weighed, and by dropping 107.84 g (1.29 mol, 2.00 eq.) of a 48% sodium hydroxide aqueous solution, an aqueous sodium neodecanoate solution was prepared. After weighing and mixing 59.69 g of heptane, 200.00 g (0.65 mol, 1.00 eq.) of a 73% stannous chloride dihydrate aqueous solution was dropped and mixed. The aqueous layer was removed by liquid separation, and after washing the organic layer with water, the solvent was distilled off by concentration under reduced pressure, yielding 577.56 g (yield 96%) of a yellow liquid <H1>.

3. Production of Polyurethane Foam In Examples and Comparative Examples, 100 parts by mass of polyol, 0.6 parts by mass of foam stabilizer, 0.1 parts by mass of amine-based catalyst, 3.0 parts by mass of blowing agent, and the catalyst in the parts by mass and composition shown in Table 1 were weighed into a cup container and stirred, to prepare a mixed solution, 40.2 parts by mass of isocyanate was added to the mixed solution and stirred, to produce polyurethane foam by slab foaming.

**[Table 1]**

| Table 1 | | Ex. | | | | Comp. Ex. | |
|---|---|---|---|---|---|---|---|
| | | 1 | 2 | 3 | 4 | 1 | 2 |
| Catalyst | A1 | 0.20 | | | | | |
| | A2 | | 0.20 | | | | |
| | A3 | | | 0.20 | | | |
| | A4 | | | | 0.20 | | |
| | Bis(neodecanoic acid) Tin | | | | | 0.20 | |
| | H1 | | | | | | 0.20 |
| Mixing Molar Ratio | | 2.12 | 2.34 | 2.71 | 3.29 | 2.00 \| | 4.72 |
| Evaluation | Rise Time (sec.) | 173 | 175 | 183 | 199 | 170 | 239 |
| | Curability | ⊚ | ○ | ○ | ○ | ⊚ | × |
| | Airflow Rate (L/min) | 8.5 | 10.1 | 10.4 | 10.2 | 7.7 | 10.5 |
| | Air Permeability | △ | ○ | ○ | ○ | × | ○ |

Details of the materials used in Examples and Comparative Examples are as follows.
· Polyol: hydroxyl value 56.1 mgKOH/g, polypropylene glycol, number of functional groups 3, weight average molecular weight 3000, manufactured by Kishida Chemical Co., Ltd.
· Foam stabilizer: VORASURF SH 192 Fluid, manufactured by Dow Toray Co., Ltd.
· Amine-based catalyst: DABCO (manufactured by Tokyo Chemical Industry Co., Ltd.) diluted to 33% with dipropylene glycol (manufactured by Tokyo Chemical Industry Co., Ltd.)
· Blowing agent: purified water
· Bis(neodecanoic acid) tin: Neostann U-50 (manufactured by Nitto Kasei Co., Ltd.)
· Isocyanate: toluene diisocyanate (TDI), manufactured by Tokyo Chemical Industry Co., Ltd.

### 2. Evaluation

### <Curability>

The time from when isocyanate was added to the mixed solution until the foam height reached its maximum was measured as the rise time, and based on the obtained rise time, curability was evaluated according to the following criteria.

Generally, when the rise time is 200 seconds or less, it can be said to have a practical curing speed, and as shown in the table, in all Examples, the rise time was 200 seconds or less, so it can be said that the catalyst compositions of the Examples of the present invention have a practical curing speed. On the other hand, in Comparative Example 2 using Catalyst Composition H1 in which the mixing molar ratio of carboxylic acid to stannous chloride exceeds 4.00, the rise time was 239 seconds, and the curing speed was low.
Excellent(⊚): 173 seconds or less
Good(O): More than 173 seconds to 200 seconds or less
Poor(×): More than 200 seconds

### <Air Permeability>

Air permeability was evaluated based on the air flow rate (L/min) measured in accordance with JIS K6400-7 Method A according to the following criteria. As shown in Table 1, in all Examples, the air permeability was good or acceptable, whereas in Comparative Example 1, the air permeability was poor, so the catalyst compositions of the Examples of the present invention can be said to be capable of producing urethane foam with high air permeability (that is, satisfying air permeability requirements).
Good(O): More than 8.5
Acceptable(△): 8.0 or more to 8.5 or less
Poor(×): Less than 8.0

## Claims

1. A method for producing a catalyst composition for producing polyurethane foam, comprising a step of mixing at least one carboxylic acid selected from neodecanoic acid, neononanoic acid, and isononanoic acid in a molar ratio of 2.10 to 4.00 moles per 1 mole of stannous chloride.

2. The method according to Claim 1, wherein the carboxylic acid is neodecanoic acid.

3. A method for producing polyurethane foam, **characterized by** reacting an active hydrogen-containing organic compound containing a polyol with a polyisocyanate in the presence of the catalyst composition produced by the method according to Claim 1 or Claim 2.
